# EUROPÄISCHE PATENTANMELDUNG

(11) **EP 3 398 799 A1**
(43) Veröffentlichungstag der Anmeldung: **07.11.2018**
(21) Anmeldenummer: 18167877.2
(22) Anmeldetag: 18.04.2018
(51) Int. Cl.: B60J 11/04, B60J 11/06, H05F 1/02

(54) **MONTAGESCHUTZ**

(30) Priorität: 19.04.2017 DE 102017108311
(71) Anmelder: DAST GmbH & Co. KG, 74405 Gaildorf (DE)
(72) Erfinder: Campmann, Dirk, 71720 Oberstenfeld (DE)
(74) Vertreter: Manitz Finsterwald Patentanwälte PartmbB

(57) **Zusammenfassung**

Montageschutz und Transportschutz für KFZ-Fahrzeuge, Raumfahrzeuge, Maschinen/Geräte und Luftfahrzeuge, mit einer Schicht aus einem einen elektrostatischen Schutz (ESD-Schutz) bietenden Trägermaterial, und einer aus einem Kunstleder bestehenden Schicht, wobei die zwei Schichten mittels eines wasserlöslichen Klebstoffs miteinander verbunden sind.

## Beschreibung

Die vorliegende Erfindung betrifft einen Montageschutz und Transportschutz für KFZ-Fahrzeuge, Raumfahrzeuge, Maschinen/Geräte und Luftfahrzeuge, mit einer Schicht aus einem einen elektrostatischen Schutz (ESD-Schutz) bietenden Trägermaterial, und einer aus einem Kunstleder bestehenden Schicht, wobei die zwei Schichten mittels eines wasserlöslichen Klebstoffs miteinander verbunden sind.

Während der Produktion bzw. Wartung von Fahrzeugen werden Bauteile und Werkzeuge in bzw. aus dem Fahrzeug gehoben. Diese Bauteile sind zum Teil sperrig und schwer, sodass es bei unbedachten Bewegungen sehr schnell zu Kratzern im Lack oder anderen Schäden an den Oberflächen im Fahrzeug kommen kann.

Ferner tritt durch Reibung an Teppichbauteilen in Fahrzeugen Reibungselektrizität auf, die mittels elektrostatischer Entladung über das Fahrzeug bzw. über Bauteile die im Fahrzeug angeordnet sind, abgeleitet werden kann. Diese ungewollte elektrostatische Entladung kann zu Schäden am Fahrzeug führen. Ferner kann eine solche elektrostatische Entladung eine am Fahrzeug arbeitende Person zumindest kurzfristig beinträchtigen, was ebenfalls zu Schäden am Fahrzeug führen kann.

Aufgabe der vorliegenden Erfindung ist es, einen leichten, einfach zu handhabenden und schnell einsetzbaren Montageschutz bereit zu stellen. Ferner ist es eine Aufgabe der vorliegenden Erfindung eine am Fahrzeug arbeitenden Person bzw. das Fahrzeug vor etwaigen elektrostatischen Entladungen zu schützen. Ebenso kann diese Art von einem preiswerten Schutz als ESD tauglicher Transportschutz beispielsweise für KFZ nach Übersee eingesetzt werden.

Diese Aufgabe wird durch einen Montageschutz mit den Merkmalen des Anspruchs 1 gelöst.

Solch ein Montageschutz für Fahrzeuge, umfasst eine Schicht aus einem einen elektrostatischen Schutz (ESD Schutz) bietenden Trägermaterial, und eine aus einem Kunstleder bestehende Schicht, wobei die zwei Schichten mittels eines wasserlöslichen Klebstoffs miteinander verbunden sind.

Die Verwendung einer Kombination aus Kunstleder und einem einen elektrostatischen Schutz bietenden Trägermaterial bietet eine besonders leichte, einfach zu handhabende und daher schnell und gut einzusetzende Möglichkeit, um einen Montageschutz bereit zu stellen.

Ein Kunstleder bietet eine inhärenten Schutz vor Oberflächenschäden am Fahrzeug, da dieses Material eine ausreichende Stärke hat, die herunterfallenden bzw. am Fahrzeug anstoßenden Bauteile bzw. Werkzeuge daran zu hindern, den Montageschutz an diesen Kontaktflächen derart zu beschädigen, dass die darunterliegende Struktur des Fahrzeugs beschädigt wird.

In diesem Zusammenhang umfasst das Material des Trägermaterials (der Trägerschicht) Polystyrol oder ein Gemisch aus Polystyrol und Polyethylen. Solche Materialien bieten eine ausreichenden ESD Schutz und Schützen somit sowohl eine an einem Fahrzeug arbeitende Person als auch das Fahrzeug selbst.

Hierbei sollte beachtet werden, dass der Schutz vor elektrostatischen Entladungen im Wesentlichen darauf gerichtet ist unvermeidbare parasitäre Aufladungen zu minimieren, z. B. durch Ableiten und Erdung der Körper. D.h. Materialien die zum ESD Schutz eingesetzt werden, sind elektrisch leitend ausgebildet, sodass diese eine Aufladung bei entsprechender Erdung, die an einem Fahrzeug durch die Karosserie gegeben ist, dadurch verhindern, dass sich eine so geringe Potentialdifferenz wie möglich zwischen verschiedenen Bauteilen entsteht. Da Entladungen nie vermieden werden können, stellen Materialen, die einen ESD-Schutz bieten einen großen elektrischen Widerstand dar, mittels dem die entstehenden Entladungen abfließen können.

Ferner muss beachtet werden, dass ein solcher Montageschutz einfach herzustellen ist und somit für jede mögliche Kontaktfläche an einem Fahrzeug unkompliziert bereitgestellt werden kann. Typischerweise werden je nach KFZ-Fahrzeug bis zu 20 verschiedene Montageschützer verwendet, was je nach Automobilhersteller die Herstellung von mehreren hundert verschiedenen Montageschützern für die Fahrzeugflotte bedeutet, sodass eine einfache Herstellung der Montageschützer sehr vorteilhaft ist.

Qualitativ hochwertige Kunstleder bieten in der Regel einen inhärenten ESD-Schutz und eine mit einem Echtleder vergleichbaren Schutz vor Oberflächenschäden bei ähnlicher Langlebigkeit bei reduzierten Kosten und reduziertem Gewicht. Dies führt zu einem schnell und einfach einsetzbaren Montageschutz. In diesem Zusammenhang ist ebenfalls anzumerken, dass wasserlösliche Klebstoffe ebenfalls elektrisch leitend ausgebildet sind und somit zusätzlich dem ESD-Schutz dienen.

Ebenso von Vorteil ist es, wenn die aus dem Kunstleder bestehende Schicht auch einen elektrostatischen Schutz aufweist. Hierbei können Schaden bzw. Beeinträchtigungen die aufgrund einer elektrostatischen Entladung herbeigeführt werden könnten, vermieden werden.

Vorzugsweise weist die aus dem Kunstleder bestehende Schicht eine Oberseite und eine Unterseite auf, wobei die Unterseite mittels des wasserlöslichen Klebstoffes mit einer Oberseite mit der Schicht aus dem Trägermaterial verbunden ist. Die Oberseite eines Kunstleders ist in der Regel die Seite des Kunstleders die relativ glatt und dekorativ ausgebildet ist, und die Unterseite ist in der Regel etwas rauer ausgebildet als die Oberseite. Durch die erhöhte Oberflächenrauigkeit der Unterseite kann der wasserlösliche Klebstoff besonders gut an der Unterseite haften, sodass eine nichtlösliche Verbindung zwischen den zwei Schichten hergestellt wird.

Bevorzugt ist die Oberseite der aus dem Kunstleder bestehenden Schicht, mit einer Unterseite der Schicht aus dem Trägermaterial zumindest elektrisch leitend verbunden. Diese elektrisch leitende Verbindung wird durch den wasserlöslichen Klebstoff auf einfache Weise bereitgestellt.

Gemäß einer bevorzugten Ausführungsform der Erfindung ist die aus dem Kunstleder bestehende Schicht an zumindest einem äußeren Rand, vorzugsweise an zwei äußeren Rändern und besonders bevorzugt an allen seinen äußeren Rändern umgebördelt. Durch das Umbördeln eines oder mehrerer oder sogar allen äußeren Rändern der aus dem Kunstleder bestehenden Schicht wird das Material des Kunstleders und somit der Montageschutz als solcher in diesen Bereichen verstärkt.

Vorzugsweise ist die aus dem Kunstleder bestehende Schicht an zumindest einer ihrer Ränder derart umgebördelt, dass die Oberseite der aus einem Kunstleder bestehenden Schicht mit der Unterseite der Schicht aus dem Trägermaterial im Kontakt steht. Hierdurch kann sichergestellt werden, dass die Oberseite und die Unterseite des Montageschutzes auf dem gleichen elektrischen Potential, vorzugsweise dem elektrischen Potential des Fahrzeugs, liegen.

Um den beim Umbördeln entstehenden Falz zu verfestigen, ist der wasserlösliche Klebstoff zusätzlich auf bzw. zwischen zumindest einem Teil dieser verschiedenen Schichten im Bereich des Falzes vorgesehen. Dies führt zu einer deutlichen Verstärkung des erfindungsgemäßen Montageschutzes an seinen äußeren Rändern.

Vorzugsweise ist zur Erhöhung der Ableitfähigkeit des wasserlöslichen Klebstoffs dem wasserlöslichen Klebstoff ein leitfähiges Material beigemischt. Z.B. kann durch die Hinzugabe von Grafitstaub oder ähnlichem Material, die Leitfähigkeit des wasserlöslichen Klebstoffs derart verbessert werden, dass der erzielbare ESD-Schutz des Montageschutzes verbessert wird.

Besonders bevorzugt liegt ein Durchgangswiderstand des mit einem leitfähigen Material gemischten wasserlöslichen Klebstoffs im Bereich von 100 kOhm/mm² bis 1 MOhm/mm². Durch die Verwendung eines zusätzlichen leitfähigen Materials kann ein Durchgangswiderstand eines wasserlöslichen Klebstoffs somit um eine Größenordnung reduziert werden.

Gemäß einer weiteren bevorzugten Ausführungsform ist eine weitere, vorzugsweise austauschbare, Schicht auf der Oberseite der aus dem Ps/PE oder PS Material bestehenden Schicht angeordnet. Eine solche weitere Schicht bietet einen noch besseren Schutz vor vorzeitigem Verschleiß bei gleichzeitiger Verlängerung einer Lebensdauer des erfindungsgemäßen Montageschutzes.

Vorzugsweise besteht die weitere Schicht aus einem gegenüber dem Trägermaterial und/oder dem Kunstleder verstärkten Material. Vorzugsweise ist diese weitere Schicht aus Polystyrol hergestellt. Solch Materialien bieten ebenfalls einen ESD-Schutz und sind einfach in ihrer Herstellung.

Besonders bevorzugt wird die weitere Schicht mittels einer lösbaren Verbindung, wie z.B. einer Schraubverbindung oder einer Nietverbindung mit den weiteren Schichten lösbar verbunden. Schraubverbindung bzw. Nietverbindung sind kostengünstig zu realisieren und ermöglichen ein einfaches Anbringen bzw. Lösen der Verbindung.

Vorzugsweise ist die lösbare Verbindung im Bereich des zumindest einen umgebördelten Randes vorgesehen. Somit wird die lösbare Verbindung im bzw. am verstärkten Bereich der Kunstlederschicht vorgesehen.

Im folgenden Abschnitt wird die vorliegende Erfindung anhand von Ausführungsbeispielen mittels der Figuren im Detail beschrieben. Es zeigen:
- Fig. 1: einen Schnitt durch einen erfindungsgemäßen Montageschutz,
- Fig. 2: eine Ansicht von oben auf eine weitere Ausführungsform des erfindungsgemäßen Montageschutzes, und
- Fig. 3: einen Schnitt durch den Montageschutz der Fig. 2.

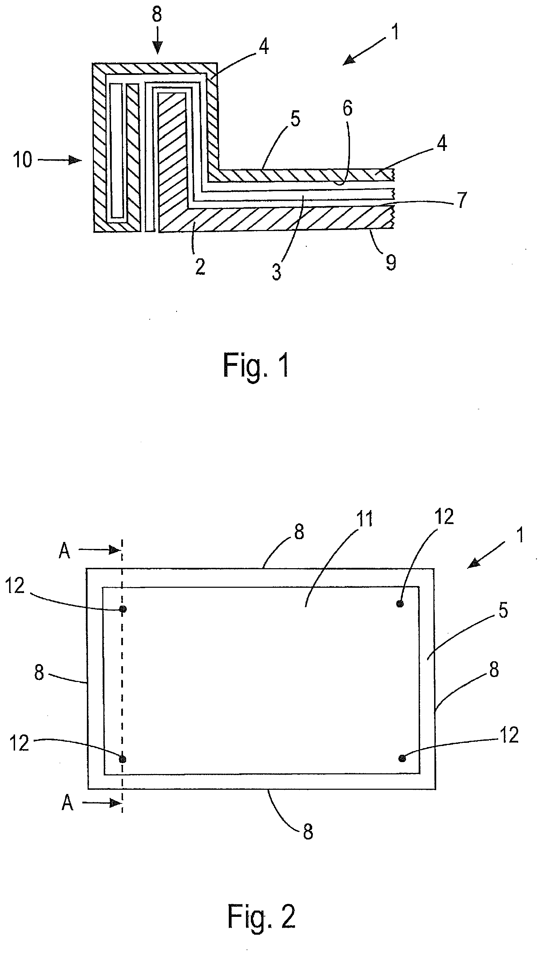

Die Fig. 1 zeigt einen Montageschutz 1 für Fahrzeuge (nicht gezeigt). Der Montageschutz 1, umfasst eine Schicht 2 aus einem elektrostatischen Schutz bietenden Trägermaterial. Auf dem Trägermaterial 2 ist ein wasserlöslicher Klebstoff 3 aufgebracht, um eine aus einem Kunstleder bestehende Schicht 4 an die Schicht 2 aus Trägermaterial anzuhaften. Die aus dem Kunstleder bestehende Schicht 4 bietet wie die Schicht aus dem Trägermaterial 2 und der wasserlösliche Klebstoff 3 einen elektrostatischen Schutz.

Die aus einem Kunstleder bestehende Schicht 4 weist eine Oberseite 5 und eine Unterseite 6 auf und die Unterseite 6 ist auf einer Oberseite 7 der Schicht 2 aus einem Trägermaterial mittels des wasserlöslichen Klebstoffs 3 nicht lösbar aufgetragen. Ferner ist ein äußerer Rand 8 der Schicht 4 aus Kunstleder derart umgebördelt, das die Oberseite 5 der aus einem Kunstleder bestehenden Schicht 4, mit einer Unterseite 9 der Schicht 2 des Trägermaterials zumindest elektrisch leitend verbunden ist.

Die Unterseite 6 der Schicht 4 aus dem Kunstleder umfasst typischerweise die geflochtenen Bestandteile des Kunstleders. Beim Verbinden der Schicht 4 aus dem Kunstleder und der Schicht 2 aus dem Trägermaterial wird der wasserlösliche Klebstoff vorzugsweise derart auf der Schicht 4 aus dem Kunstleder aufgetragen, das das Gewebe (die Flechtungen) mit dem Klebstoff 3 durchsetzt sind, um eine bestmögliche Verbindung zwischen den Schichten 2 und 4 zu erzielen.

Hierbei ist zu beachten, dass zumindest ein Rand 8, besonders bevorzugt alle Ränder der aus einem Kunstleder bestehenden Schicht 4 an allen seinen Rändern 8 umgebördelt ist. Ferner ist die aus einem Kunstleder bestehende Schicht 4 an seinem Rand 8 derart umgebördelt, dass die Oberseite 5 der aus einem Kunstleder bestehenden Schicht 4 mit der Unterseite 9 der Schicht 2 aus einem Trägermaterial im Kontakt steht.

Ebenfalls ist in der Fig. 1 ersichtlich, das zum Verfestigen einer beim Umbördeln entstehender Falz 10, der wasserlösliche Klebstoff 3 zusätzlich auf bzw. zwischen den verschiedenen Schichten 2, 4 im Bereich der Falz 10 angeordnet ist.

Zur Erhöhung der Ableitfähigkeit des wasserlöslichen Klebstoffs 3, wird dem wasserlöslichen Klebstoff 3 ein leitfähiges Material (nicht gezeigt) beigemischt. Hierbei entsteht ein wasserlöslicher Klebstoff 3, dessen Durchgangswiderstand im Bereich von 100 kOhm/mm² bis 1 MOhm/mm² liegt. Somit ist der Durchgangswiderstand um eine Größenordnung von 1 MOhm/mm² bis 10 MOhm/mm² gegenüber einem marktüblichen wasserlöslichen Klebstoff 3 reduziert worden.

Beispielsweise kann der wasserlösliche Klebstoff SIMALFA 309 der Fa. ALFA Klebstoffe AG verwendet werden. Diesem Klebstoff kann ein Grafitstaub mit einer Körngrösse von ca. 0,005 mm, bspw. von Fa. Laborladen, Grafitpulver - Korngröße 0,0055mm - CAS-Nummer: 7782-42-5 in einem Verhältnis von Klebstoff 3 zu Graphitstaub im Bereich von 10:1 bis 20:1, vorzugsweise im Bereich von 14:1 bis 18:1 beigemischt werden, um die obigen Durchgangswiderstände zu erzielen.

Um die Schicht 2 aus einem Trägermaterial mit der Schicht 4 aus einem Kunstleder zu verbinden wird der wasserlösliche Klebstoff 3 mit einer Schichtdicke im Bereich von 0,2 mm bis 1 mm, vorzugsweise 0,3 mm bis 0,5 mm auf der Schicht 2 aus dem Trägermaterial aufgetragen. Vorzugsweise wird zur weiteren Erhöhung der Ableitfähigkeit der Klebstoff 3 derart auf der Schicht 2 des Trägermaterials aufgetragen, dass der Klebstoff 3 eine rauhe Oberflächenkontur der Unterseite 6 der Schicht 4 aus einem Kunstleder vollflächig bedeckt, um die verklebten Materialien besser ableitfähig zu machen.

Als Trägermaterial kann ein elektrisch leitfähiges Polystyrol verwendet werden, z.B. Maywotron und Maywotron pure der Fa. Röchling. Alternativ kann ein Gemisch aus elektrisch leitfähigem Polystyrol und Polyethylen verwendet werden, z.B. ein PS/PE-Blend leitfähig der Fa. KVS Kunststoff-Platten und -Folien

Die Schicht 2 aus Trägermaterial weist eine Dicke im Bereich von 1 mm bis 4 mm, vorzugsweise im Bereich von 2,0 mm bis 3 mm auf. Die Schicht 4 aus Kunstleder ist vorzugsweise eine elektrisch leitfähige Kunststofffolie- , z.B. der Fa. Hornschuch mit dem Produktnamen skai Mano S, und weist eine Dicke im Bereich von 1,0 mm bis 1,2 mm, vorzugsweise im Bereich von 1 mm bis 1,1 mm auf.

Der erfindungsgemäße Montageschutz 1 besteht somit aus einer harten und belastbaren Seite 9, der Unterseite 9 der Schicht 2 aus Trägermaterial und einer weichen Oberseite 5 der Schicht 4 aus einem Kunstleder, die dazu vorgesehen ist, empfindliche Oberflächen zu schonen. Der prinzipielle Aufbau umfasst 2 ableitfähige Materialien, die mit einem wasserlöslichen Klebstoff 3 verbunden sind.

Der Falz 10 am äußeren Rand 8 der Schicht 4 aus einem Kunstleder dient zur Vergrößerung einer Kontaktfläche zwischen der Schicht 2 aus einem Trägermaterial und einer Schicht 4 aus einem Kunstleder und führt zur besseren Ableitfähigkeit des gesamten Montageschutzes 1.

Die Fig. 2 zeigt eine weitere Ausführungsform eines Montageschutzes 1. Als Schutz gegen vorzeitiges Abnutzen des Montageschutzes 1 ist eine weitere Schicht 11 mittels einer lösbaren Verbindung 12 auf der Oberseite 5 der aus PS/PE oder PS bestehenden Schicht 2 angeordnet.

Die weitere Schicht 11 besteht aus einem gegenüber der Schicht 2 aus dem Gleichen Material wie Schicht 2 oder aus einem härten Material wie Schicht 2, z.B. Polystyrol. Um die Verstärkung zu erzeugen, ist diese Schicht 11 dicker oder gleichdick ausgeführt als die Schicht 2.

Die Schicht 11 ist als Verschleiß- oder Wechselteil gedacht, um verschiedenste Anforderungen an den Montageschutz zu ermöglichen. Wenn es sich um einen Verschleißbereich handelt, ist dieser kleiner wie der ganze Montageschutz und lässt sich kostengünstig austauschen, ohne den ganzen Montageschutz zu ersetzen. Die Schicht 11 kann auch als Versteifung auf den Montageschutz gesetzt werden. Die ESD Fähigkeit leidet darunter nicht, wenn ESD fähige Kunststoffe verbaut werden und die Auflage/Kontaktflächen möglichst großflächig sind.

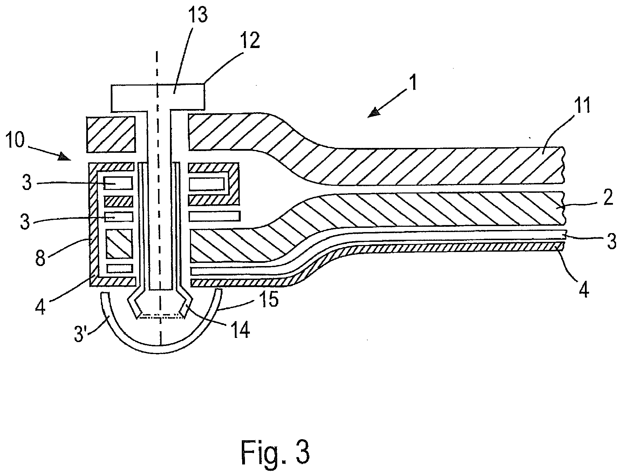

Die Fig. 3 zeigt einen Schnitt durch den Montageschutz 1 der Fig. 2 entlang der Schnittlinie A:A. Dieser Schnitt zeigt eine mögliche Ausführungsform der lösbaren Verbindung 12. Diese besteht aus einem Bolzen 13 der durch die weitere Schicht 11 geführt ist und mit einer Nietmutter 14 kooperiert. Der Bolzen 13 und/oder die Nietmutter 14 oder ein andersartiges Verbindungselement kann aus Kunststoff bestehen wodurch eine Beschädigung der Karosserie nicht zu befürchten ist. Sollte Verbindungselemente aus Metall zur Anwendung kommen, so sind diese vorzugsweise als Senkkopfelemente realisiert, die mit einem flexiblen Überzug abgedeckt sind und eine Beschädigung der Karosserie durch die Verbindungselemente zu vermeiden. Solche Überzüge können auch mit Verbindungselementen aus Kunststoff ebenfalls verwendet werden.

Die Nietmutter 14 ist im Bereich der Falz 10 angeordnet und klemmt zusätzlich zum Klebstoff 3 die verschiedenen Schichten 2, 3 und 4 aneinander. Um ein Fahrzeug vor Kratzern und ähnlichem zu schützen ist eine weitere Schicht 3' aus Klebstoff am Ende 15 der Nietmutter 14 angeordnet. Anstelle einer Schicht 3' aus Klebstoff kann auch eine andere Art Schutz am Ende 15 der Nietmutter 14 vorgesehen sein. Andere Arten von Nietverbindungen und/oder Schraubverbindungen können als lösbare Verbindung 12 vorgesehen sein.

Der Montageschutz 1 der vorliegenden Erfindung kann an verschiedene Öffnungen eines Fahrzeugs angepasst werden. Z.B. kann der Montageschutz 1 für zumindest einen Teil einer Fahrertür, einer Beifahrertür, weiteren im Fahrzeug vorgesehenen Türen, einer Kofferraumöffnung einer Motorraumöffnung, einer Öffnung im Bereich der Räder oder ähnlichem vorgesehen sein.

Wie in den Fig. 1 und 3 gezeigt kann der Montageschutz 1 verschiedene Formen und Außenmasse aufweisen. Die Form und die Außenmasse sind an die jeweilige Fahrzeugöffnung angepasst.

## Patentansprüche

1. Montageschutz für KFZ-Fahrzeuge, Raumfahrzeuge und Luftfahrzeuge, mit einer Schicht (2) aus einem einen elektrostatischen Schutz bietenden Trägermaterial, und
einer aus einem Kunstleder bestehenden Schicht (4),
wobei die zwei Schichten (2, 4) mittels eines wasserlöslichen Klebstoffs (3) miteinander verbunden sind.

2. Montageschutz nach Anspruch 1,
wobei die aus dem Kunstleder bestehende Schicht (4) ebenfalls einen elektrostatischen Schutz aufweist.

3. Montageschutz nach Anspruch 1 oder 2,
wobei die aus dem Kunstleder bestehende Schicht (4) eine Oberseite (5) und eine Unterseite (6) aufweist und mit der Unterseite (5) mittels des wasserlöslichen Klebstoffs (3) mit einer Oberseite (7) der Schicht (2) aus dem Trägermaterial verbunden ist.

4. Montageschutz nach Anspruch 3,
wobei die Oberseite (5) der aus dem Kunstleder bestehenden Schicht (4), mit einer Unterseite (9) der Schicht (2) aus dem Trägermaterial zumindest elektrisch leitend verbunden ist.

5. Montageschutz nach zumindest einem der vorstehenden Ansprüche, wobei die aus dem Kunstleder bestehende Schicht (4) an zumindest einem äußeren Rand (8), vorzugsweise an zwei äußeren Rändern (8) und besonders bevorzugt an allen seinen Rändern (8) umgebördelt ist.

6. Montageschutz nach Anspruch 5,
wobei die aus dem Kunstleder bestehende Schicht (4) an zumindest einem seiner Ränder (8) derart umgebördelt ist, dass die Oberseite (5) der aus dem Kunstleder bestehenden Schicht (4) mit der Unterseite (9) der Schicht (2) aus dem Trägermaterial im Kontakt steht; und/oder wobei zum Verfestigen eines beim Umbördeln entstehenden Falzes (10), der wasserlösliche Klebstoff (3) zusätzlich auf bzw. zwischen den verschiedenen Schichten (2, 4) im Bereich des Falzes (10) angeordnet ist.

7. Montageschutz nach zumindest einem der vorstehenden Ansprüche, wobei zur Erhöhung der Ableitfähigkeit des wasserlöslichen Klebstoffs (3), dem wasserlöslichen Klebstoff ein leitfähiges Material beigemischt ist.

8. Montageschutz nach Anspruch 7,
wobei ein Durchgangswiderstand des mit einem leitfähigen Material gemischten wasserlöslichen Klebstoffs (3) im Bereich von 100 kOhm/mm² bis 1 MOhm/mm² liegt.

9. Montageschutz nach zumindest einem der vorstehenden Ansprüche, wobei eine weitere, vorzugsweise austauschbare, Schicht (11) auf der Oberseite (5) der aus dem Kunstleder bestehenden Schicht (4) angeordnet ist.

10. Montageschutz nach Anspruch 9,
wobei die weitere Schicht (11) aus dem gleichen Material besteht wie ein Material der Schicht (2) aus dem Trägermaterial und/oder der Schicht (4) aus dem Kunstleder, vorzugsweise aus einem Gemisch aus Polystyrol und Polyethylene oder aus Polystyrol hergestellt ist, und wobei vorzugsweise die weitere Schicht (11) mittels einer lösbaren Verbindung (12), wie z.B. einer Schraubverbindung (13, 14) und/oder einer Nietverbindung (15) mit den weiteren Schichten (2, 4) lösbar verbunden wird.
